# DEMANDE DE BREVET EUROPEEN

(11) **EP 1 117 057 A1**
(43) Date de publication de la demande: **18.07.2001**
(21) Numéro de dépôt: 00410159.8
(22) Date de dépôt: 21.12.2000
(51) Int. Cl.: G06K 7/00

(54) **Lecteur de cartes à puces synchrones**

(30) Priorité: 22.12.1999 FR 9916287
(71) Demandeur: Ascom Monétel SA, 07500 Guilherand-Granges (FR)
(72) Inventeur: Coussieu, Alain, 07000 Flaviac (FR)
(74) Mandataire: de Beaumont, Michel

(57) **Abrégé**

L'invention concerne un lecteur (30) de cartes à puce synchrones du type comprenant un microprocesseur (1) pour gérer les échanges entre le lecteur et une carte (2) introduite dans un coupleur électrique (4), le microprocesseur délivrant notamment au moins un signal de commande (A/RST) et recevant un signal d'entrée/sortie (I/O) sur un bit, caractérisé en ce qu'il comporte un générateur programmable (32) de trains d'impulsions en logique câblée, propre à délivrer un signal impulsionnel de fréquence fixe à destination du coupleur électrique pour l'incrémentation d'un compteur (17) de la carte à puce.

## Description

La présente invention concerne le domaine des lecteurs de cartes à puces synchrones, c'est-à-dire des cartes à logique câblée dépourvues de microprocesseur. Parmi les applications de ce type de carte, la plus répandue est celle des cartes prépayées, par exemple, les cartes téléphoniques. Ces cartes sont appelées cartes synchrones par opposition aux cartes dites asynchrones qui sont pourvues d'un microprocesseur et qui dialoguent par une liaison série asynchrone avec le lecteur.

L'invention s'applique plus particulièrement aux échanges d'informations entre un lecteur de cartes synchrones et une carte qui y est engagée. Les opérations qu'est susceptible d'effectuer le lecteur sur la carte concernent à la fois des opérations de lecture, c'est-à-dire d'extraction d'informations provenant de la carte, que des opérations d'écriture, par exemple, pour inscrire les unités de pré-paiement consommées ou restant disponibles sur la carte.

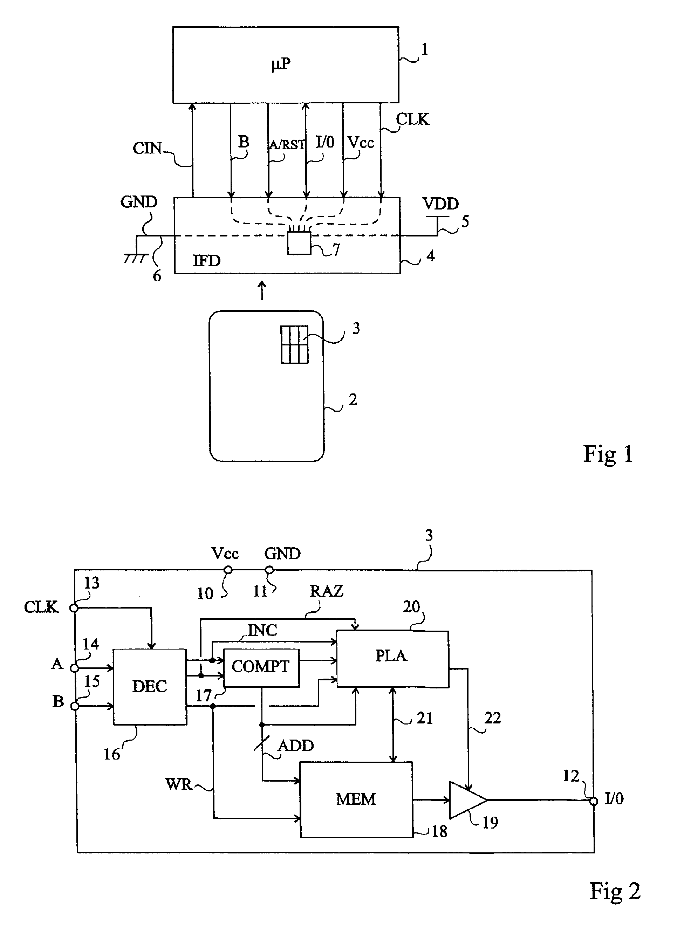

La figure 1 représente, de façon partielle et très schématique, un lecteur classique de cartes synchrones du type auquel se rapporte la présente invention. Un tel lecteur comporte de multiples éléments qui sont, pour une grande part, fonction de l'application à laquelle ce lecteur est destiné. Par souci de simplification, on ne considérera ci-après que les éléments du lecteur qui ont un lien direct avec la présente invention, à savoir ceux qui se rapportent à l'interface et au transport des signaux électriques entre un microprocesseur 1 (*µ* P) du lecteur et une carte 2 à puce 3 synchrone. La communication entre le lecteur et la carte s'effectue généralement par l'intermédiaire d'un coupleur électrique 4 (IFD). Ce coupleur 4 comporte une fente ou lumière (non représentée) d'introduction de la carte 2 ainsi qu'une zone 7 pourvue de contacts (non représentés) propres à venir en relation électrique avec des bornes d'accès à la puce 3. Ces contacts sont destinés à être raccordés, côté lecteur, aux éléments nécessaires au traitement.

Le système classique le plus répandu, illustré par la figure 1, prévoit que tous les échanges entre la carte 2 et le reste des équipements du lecteur transitent par le coupleur 4 et par le microprocesseur 1 du lecteur ou terminal. S'agissant d'un lecteur de cartes synchrones, le microprocesseur doit délivrer un signal d'horloge CLK au coupleur 4 pour le transfert de ce signal d'horloge à la carte 2. Ce signal CLK est plus précisément constitué de trains d'impulsions d'une certaine durée pour, notamment, incrémenter un compteur de la carte. Un signal positif d'alimentation continu Vcc transite également par le microprocesseur jusqu'à la carte 2. Le potentiel de référence (la masse GND) vient quand à lui généralement directement d'une connexion au coupleur 4. Une liaison I/O d'entrée et sortie de données constitue généralement la seule liaison bidirectionnelle entre le microprocesseur 1 et le coupleur 4. Deux liaisons de commande A/RST et B servent à communiquer des instructions du microprocesseur 1 à la carte 2. La liaison B est optionnelle et ne sert que pour des lecteurs compatibles avec des cartes d'une première famille, tandis que la liaison A/RST sert pour toute les familles de carte. En effet, les cartes synchrones se répartissent aujourd'hui en deux grandes familles selon leur mode de fonctionnement et, plus particulièrement, le mode d'échange de données entre le lecteur et la carte et le mode de commande d'une écriture dans la carte. Les différences entre les deux grandes familles de carte seront détaillées ultérieurement.

Au moins un signal CIN est véhiculé entre le coupleur 4 et le microprocesseur 1 sans être acheminé jusqu'à la carte 2. Ce signal CIN constitue un signal de détection de présence d'une carte dans le coupleur 4. Ce dernier est par conséquent alimenté sous une tension Vdd entre des bornes 5 d'alimentation positive et 6 de masse. Le cas échéant, le potentiel Vdd est amené jusqu'à un contact du coupleur 4 pour être transmis à une carte 2 introduite dans le lecteur.

On notera que toutes les liaisons décrites ci-dessus entre le microprocesseur 1 et le coupleur 4, ainsi qu'entre le coupleur 4 et la puce 3 de la carte 2, sont des liaisons unifilaires. On notera également que l'exemple de la figure 1 est celui d'un lecteur adapté à recevoir indifféremment les cartes de l'une ou l'autre des deux grandes familles de cartes mais que, dans certains cas, le lecteur est dédié à une famille de carte et tous les signaux de la figure 1 ne sont pas présents. En outre, on notera qu'un même lecteur peut également être conçu pour recevoir des cartes asynchrones. En figure 1, on a symbolisé l'interface mécanique de contact, entre le coupleur 4 et la puce 3 d'une carte 2 engagée dans celui-ci, par un bloc 7 auquel les liaisons avec les différents signaux concernés ont été représentées en pointillés.

Comme cela a été indiqué précédemment, les deux grandes familles de cartes synchrones se distinguent par les signaux utilisés et par le protocole d'échange entre la carte et le microprocesseur du lecteur. Quelle que soit la famille de cartes, les lecteurs et, plus particulièrement les coupleurs électriques, comportent généralement huit contacts pour prévoir d'éventuelles évolutions futures. A l'heure actuelle, seuls cinq ou six de ces huit contacts sont utilisés par les deux grandes familles de cartes synchrones utilisées dans les systèmes de cartes téléphoniques prépayées. Une famille dite à protocole six contacts utilise les signaux Vcc, GND, I/O, A, B, et CLK. Une autre famille de cartes, dite à protocole cinq contacts, utilise les signaux Vcc, GND, I/O et CLK, ainsi qu'un signal RST transitant sur le même contact que le signal A. On désignera par la suite par première famille, la famille de cartes à cinq contacts et par deuxième famille, la famille de cartes à six contacts.

La figure 2 représente, de façon partielle et très schématique, un exemple classique de l'architecture d'une carte 2 fonctionnant selon un protocole à six contacts. La figure 2 représente, schématiquement et sous forme de blocs, la structure interne de la puce 3 de la carte. Deux bornes 10, 11 reçoivent respectivement les signaux Vcc et de masse GND. Une borne 12 constitue une borne d'entrée/sortie de données (signal I/O). Trois bornes d'entrées 13, 14 et 15 reçoivent, respectivement, les signaux CLK, A et B délivrés par le microprocesseur (1, figure 1).

Les signaux CLK, A et B sont envoyés sur un décodeur 16 (DEC) chargé de générer, à partir d'une combinaison logique de ces signaux, des signaux de remise à zéro RAZ et d'incrémentation INC d'un compteur 17 (COMPT) et un signal d'écriture WR dans une mémoire 18 (MEM). La mémoire 18 est adressée par un mot délivré par le compteur 17 au moyen d'une liaison d'adresses ADD sur plusieurs bits. Le contenu de la mémoire peut être lu sur la borne 12 d'entrée/sortie par l'intermédiaire d'un amplificateur 19. Le principe de fonctionnement d'une carte synchrone du type auquel s'applique la présente invention est basé sur une mémoire fonctionnant en accès série, c'est-à-dire que le compteur 17 délivre l'adresse de lecture ou d'écriture dans la mémoire sur la base d'une incrémentation de l'adresse, chaque mot de la mémoire comprenant un seul bit.

Une carte à puce synchrone telle que décrite ci-dessus correspond à une carte dite de première génération.

Plus récemment sont apparues des cartes, dites de deuxième génération, dans lesquelles la puce 3 comprend des fonctions dites actives de calcul de signature ou d'authentification pour éviter une duplication ou un piratage des cartes. Il s'agit toujours de cartes synchrones c'est-à-dire en logique câblée, qui sont donc dépourvues de processeur de calcul. Dans une carte de deuxième génération, la puce 3 comporte un réseau logique programmable 20 (PLA) chargé de déterminer les droits d'accès à la mémoire quand la carte est introduite dans un lecteur. Un tel réseau logique programmable est associé à un registre à décalage (non représenté) et utilise, dans l'exemple de la carte de la deuxième famille représentée en figure 2, les signaux CLK, A et B pour effectuer des calculs logiques. Par conséquent, le réseau 20 reçoit les signaux RAZ, INC et WR qui, lorsque la carte est dans un mode de fonctionnement à vérification d'accès, ne correspondent bien entendu pas à des signaux de remise à zéro, d'incrémentation du compteur et d'écriture de la mémoire, mais à des signaux adaptés au réseau logique programmable. En effet, le protocole d'authentification au moyen du réseau logique programmeble 20 ne s'effectue pas en même temps que l'écriture ou la lecture dans la mémoire de la carte, mais de façon temporellement distincte. Le réseau 20 communique également avec la mémoire 18 par une liaison 21 et commande l'amplificateur 19 d'entrée/sortie par l'intermédiaire d'une liaison 22. Le réseau 20 reçoit en outre le résultat issu du compteur 17. Dans le cas de cartes à puces de deuxième génération, la mémoire 18 est généralement une mémoire RAM ou EEPROM alors que, dans les cartes de première génération, cette mémoire est généralement une ROM ou une EPROM. Toutefois, ces distinctions sont fonction de l'application et du protocole de communication entre le lecteur et la carte.

La puce 3 comporte d'autres éléments qui n'ont pas été détaillés ci-dessus, en particulier, les différentes liaisons des blocs aux sources d'alimentation présentes entre les bornes 10 et 11 ainsi que, le cas échéant, d'autres éléments de traitement ou de calcul en logique câblée.

On notera qu'une carte de la première famille basée sur un protocole à cinq contacts comprend, comme la carte illustrée en relation avec la figure 2, essentiellement une mémoire et un compteur d'accès à cette mémoire. Les autres éléments d'une carte de cette première famille sont parfaitement connus. Les structures internes des cartes auxquelles s'applique la présente invention ne seront pas détaillées plus avant pour être parfaitement classiques et ne font pas l'objet de la présente invention.

La présente invention s'applique plus particulièrement aux terminaux ou lecteurs de cartes synchrones capables de lire, entre autres, des cartes de deuxième génération, c'est-à-dire des cartes pour lesquelles est mise en oeuvre une fonction de calcul de signature, d'authentification, de cryptographie ou d'anti-fraude. Par la suite, on fera référence à une fonction d'authentification au contrôle de signature, étant entendu que l'on désigne par cette expression l'ensemble des fonctions de vérification ou anti-fraude.

Les fonctions d'authentification sont rendues de plus en plus complexes afin d'améliorer leur fiabilité en raison des progrès incessants des fraudeurs. La mise en oeuvre d'un mécanisme de calcul de signature fait généralement appel à un calcul au moyen du réseau logique câblé à partir de signaux reçus sur les bornes 13, 14 et 15 de la carte. Le résultat de ce calcul est délivré par la carte au lecteur qui le compare alors à un résultat qu'il obtient en interne. Le cas échéant, d'autres traitements algorithmiques sont également faits côté lecteur avant de comparer les résultats.

On distingue deux grands types de protocoles de contrôle de signature pour des cartes synchrones.

Un premier type effectue les calculs sans imposer de contraintes temporelles pour le calcul effectué par la carte et pour le traitement correspondant côté microprocesseur.

Un deuxième type de carte fait appel à un protocole généralement plus complexe qui nécessite une séquence de contrôle de signature non interrompue. Généralement, la carte entre dans un registre à décalage dynamique des données internes ainsi qu'une valeur aléatoire donnée par le terminal. La carte fait le calcul et délivre le résultat au microprocesseur. Dans ce genre de protocole d'authentification, la signature n'est pas reconnue si la séquence de calcul se trouve interrompue. Le but est ici encore d'améliorer la sécurité des cartes. Dans l'exemple des cartes téléphoniques pré-payées, le protocole de contrôle de signature est généralement effectué avant le début d'une communication et après chaque débit d'une impulsion téléphonique sur la carte pré-payée. Si la signature n'est pas reconnue, la communication est alors immédiatement coupée.

Un problème qui se pose alors pour le lecteur est que la séquence d'authentification qui est généralement relativement longue (de 10 à 100 millisecondes) risque d'interférer avec d'autres fonctions que doit traiter le microprocesseur, ce qui impose classiquement de recourir à des terminaux de lecture plus complexes.

Une première solution classique pour contrôler les entrées et sorties de la carte côté terminal lorsque celui-ci est adapté à recevoir des cartes utilisant un protocole de contrôle de signature à contraintes de temps, est de masquer les interruptions du processeur unique du lecteur pour rendre prioritaire le déroulement du programme de contrôle de signature. Un problème qui se pose cependant est qu'un tel fonctionnement est souvent incompatible avec d'autres fonctions du lecteur en raison de la relative longue durée des protocoles de contrôle de signature. En effet, dans le cas de l'utilisation d'un microprocesseur unique au sein du terminal, ce microprocesseur sert à de multiples autres tâches, par exemple, la gestion de la carimmication téléphonique elle-même.

Une deuxième solution connue est de prévoir un terminal pourvu de deux microprocesseurs distincts. Un microprocesseur spécifique est alors dédié au dialogue avec la carte. Un inconvénient de cette solution est le coût lié au dédoublement du microprocesseur et la complexité du système obtenu.

Une troisième solution connue est de prévoir un circuit en logique câblée spécifique pour exécuter la séquence de contrôle de signature. Une telle solution permet de préserver le recours à un microprocesseur unique. Toutefois, un inconvénient majeur est que la séquence de contrôle de signature est alors figée une fois pour toute, de sorte que la durée de vie du terminal en est considérablement réduite car il faut alors le changer (ou changer au moins le circuit spécifique) en cas de modification du protocole d'authentification. Dans certains cas, on peut utiliser un circuit partiellement versatile en autorisant le chargement d'un nouveau code de vérification côté terminal. Dans ce cas, l'intégration de la totalité de la fonction est particulièrement gourmande en ressources (en nombre de portes logiques), ce qui accroît le coût et l'encombrement du système.

La présente invention vise à pallier les inconvénients des solutions connues proposées pour des terminaux de lecture de cartes synchrones propres à mettre en oeuvre des protocoles d'authentification à contrainte de temps.

L'invention vise, en particulier, à proposer une solution qui soit compatible avec l'utilisation d'un microprocesseur unique au sein du lecteur, ou, à tout le moins, qui ne nécessite pas un microprocesseur spécifique pour le contrôle des échanges avec la carte.

L'invention vise également à proposer une solution qui soit versatile en autorisant un changement du protocole d'authentification sans qu'il soit nécessaire de prévoir un système encombrant comme dans la troisième solution classique.

L'invention vise également à ce que les protocoles d'authentification ne nuisent pas aux autres fonctions exécutées par le microprocesseur du lecteur.

L'invention vise en outre à proposer une solution qui permette de réaliser un lecteur susceptible de recevoir n'importe quel type de cartes, qu'il s'agisse de cartes de première génération, ou de cartes de deuxième génération mettant en oeuvre un protocole de contrôle de signature avec ou sans contrainte temporelle, et qui puisse fonctionner avec des cartes à protocole cinq et six contacts.

Pour atteindre ces objets, la présente invention prévoit un lecteur de cartes à puce synchrones du type comprenant un microprocesseur pour gérer les échanges entre le lecteur et une carte introduite dans un coupleur électrique, le microprocesseur délivrant notamment au moins un signal de commande et recevant un signal d'entrée/sortie sur un bit, le lecteur comportant un générateur programmable de trains d'impulsions en logique câblée, propre à délivrer un signal impulsionnel de fréquence fixe à destination du coupleur électrique pour l'incrémentation d'un compteur de la carte à puce.

Selon un mode de réalisation de la présente invention, le générateur d'impulsions comporte une borne de sortie d'un signal d'interruption prioritaire à destination du microprocesseur.

Selon un mode de réalisation de la présente invention, le nombre d'impulsions générées par ledit générateur est programmable par le microprocesseur.

Selon un mode de réalisation de la présente invention, le lecteur comporte, sur une ligne de transmission d'un signal d'horloge à destination de la carte, un sélecteur propre à sélectionner un signal d'horloge entre une sortie du microprocesseur et une sortie du générateur d'impulsion.

Selon un mode de réalisation de la présente invention, la sortie du générateur d'impulsions est sélectionnée pour chaque cycle d'incrémentation du compteur de la carte.

L'invention concerne également une interface entre un microprocesseur et un élément de contacts électriques destiné à contacter une carte à puce synchrone, comportant un générateur programmable de trains d'impulsions en logique câblée, propre à délivrer un signal impulsionnel de fréquence fixe ; et des liaisons directes entre le microprocesseur et l'élément de contact pour tous les autres signaux à destination de la carte ou à destination du microprocesseur, le nombre d'impulsions délivrées par le générateur étant programmable par le microprocesseur.

Selon un mode de réalisation de la présente invention, la fréquence des impulsions du générateur programmable est fixée par le microprocesseur.

Selon un mode de réalisation de la présente invention, le générateur programmable comporte une sortie d'un signal d'interruption prioritaire à destination du microprocesseur.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente, partiellement et de façon très schématique, un lecteur de cartes synchrones selon un mode de réalisation de la présente invention ;
la figure 4 représente une table de vérité de détermination des commandes reçues par une carte en fonction de signaux délivrés par le lecteur pour des cartes synchrones d'une première famille ;
la figure 5 illustre, sous forme de chronogrammes, le fonctionnement d'une carte de la première famille ;
la figure 6 représente une table de vérité de détermination des commandes reçues par une carte en fonction de signaux délivrés par le lecteur pour des cartes synchrones d'une deuxième famille ;
la figure 7 illustre, sous forme de chronogrammes, le fonctionnement d'une carte de la deuxième famille ;
la figure 8 représente, de façon très schématique et partiellement, un mode de réalisation d'un générateur programmable de trains d'impulsions selon la présente invention ; et
la figure 9 illustre, sous forme de chronogramme, un exemple de fonctionnement d'un lecteur de cartes synchrones selon la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, tous les éléments constitutifs du lecteur n'ont pas été représentés pour être parfaitement classiques.

Une caractéristique de la présente invention est de prévoir, dans un lecteur de cartes synchrones, un générateur de trains d'impulsions programmable réalisé en logique câblée qui soit propre à définir un signal impulsionnel de fréquence fixe à la place du microprocesseur, dans certaines phases de fonctionnement du système.

Une autre caractéristique de l'invention est d'associer ce générateur de trains d'impulsions au microprocesseur du lecteur, et d'organiser leurs interventions respectives de façon que le microprocesseur génère l'ensemble des signaux nécessaires au fonctionnement de la carte, à l'exception des trains d'impulsions dans des phases de contrôle de signature avec contraintes de temps.

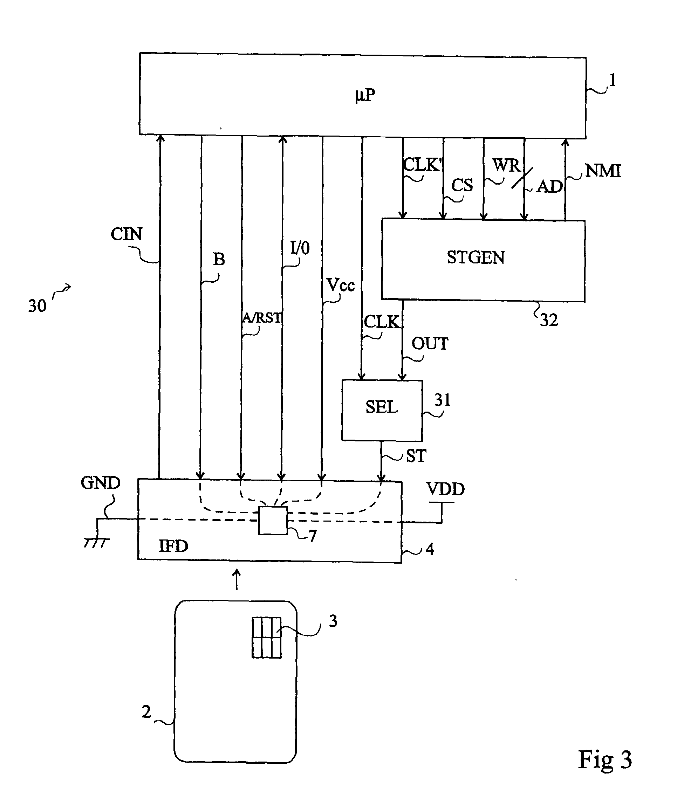

La figure 3 représente, de façon partielle et schématique, un mode de réalisation d'un lecteur 30 de carte 2 à puce 3 synchrone selon la présente invention. La représentation de la figure 3 est à rapprocher de celle de la figure 1 de l'état de la technique.

Comme précédemment, l'interface entre le lecteur et une carte 2 est constituée d'un coupleur 4, propre à recevoir par engagement une carte 2 à puce 3 et comprenant une zone 7 pourvue de contacts (non représentés) propres à relier électriquement des bornes de la puce 3 à des entrées/sorties de signaux du coupleur 4. Ces entrées/sorties reçoivent, comme précédemment, un certain nombre de signaux du microprocesseur 1 (*µ*p) et émettent certains signaux en direction de celui-ci. Les échanges entre le microprocesseur 1 et le coupleur 4 ne sont, selon l'invention, pas modifiés par rapport au fonctionnement classique de la figure 1 pour ce qui concerne les signaux Vcc d'alimentation, I/O d'entrée/sortie de données, A/RST et B de commande, ainsi que pour le signal de masse GND et le signal CIN de détection de présence de carte par le coupleur 4.

Selon l'invention, on prévoit un sélecteur 31 pour délivrer un signal ST de trains d'impulsions à destination du coupleur 4 et de la carte 2. Ce sélecteur 31 reçoit, d'une part le signal CLK classique provenant directement du microprocesseur 1 et, d'autre part, un signal de sortie OUT d'un générateur 32 (STGEN) de trains d'impulsions réalisé en logique câblée selon la présente invention. Le générateur 32 est programmable par le microprocesseur 1 et a pour rôle d'envoyer à la carte 3 des trains d'impulsions de fréquence fixe en lieu et place du microprocesseur pour décharger celui-ci, au moins pendant des phases d'authentification de signature à contraintes de temps.

Une autre caractéristique de la présente invention est que le générateur de trains d'impulsions 32 comporte une sortie propre à générer une interruption NMI prioritaire à destination du microprocesseur 1. Le rôle de cette interruption est de permettre au microprocesseur de reprendre la main sur le fonctionnement de la carte sans perdre de temps pour respecter les contraintes de temps du protocole d'authentification de signature.

La présente invention tire son origine d'une nouvelle analyse des protocoles d'échange de signaux entre une carte synchrone et un lecteur, selon les différentes familles de cartes existantes.

L'inventeur s'est en effet aperçu qu'il était possible, au moyen d'un générateur de trains d'impulsions programmable en logique câblée, de reporter la fonction d'incrémentation du compteur de tous les types de cartes synchrones. Or, cette séquence d'incrémentation du compteur est la plus fréquente par rapport aux instructions de remise à zéro du compteur ou d'écriture dans la mémoire de la carte.

De plus, l'inventeur a pu constater que le mode de fonctionnement de l'incrémentation du compteur est sensiblement toujours le même d'une carte à l'autre, sauf en ce qui concerne la fréquence des impulsions. Par conséquent, un générateur de trains d'impulsions programmable en fréquence et en nombre d'impulsions permet de reporter, du microprocesseur à ce générateur, la fourniture des incrémentations du compteur des cartes.

En outre, dans les phases de contrôle de signature et, plus particulièrement, dans les phases de contrôle de signature de seconde génération utilisant un réseau logique programmable et un registre à décalage, on doit fournir des incréments au registre à décalage pour servir de signal d'horloge interne car la carte synchrone ne génère pas elle-même d'horloge. Ce signal d'horloge est précisément fourni par un signal d'incrémentation du compteur de la carte.

Une autre caractéristique de la présente invention, qui la distingue des lecteurs de cartes ayant prévu des circuits en logique câblée pour générer tous les signaux de cade à destination des cartes, est que l'on se limite à la génération d'un seul signal ST. L'inventeur considère en effet que, pour générer plusieurs signaux au moyen d'un circuit en logique câblée, il faut nécessairement gérer les positions des signaux les uns par rapport aux autres de façon temporelle. De plus, ces positions changent d'une famille de cartes à l'autre. Cela conduit obligatoirement à un circuit plus complexe et moins versatile que celui de l'invention.

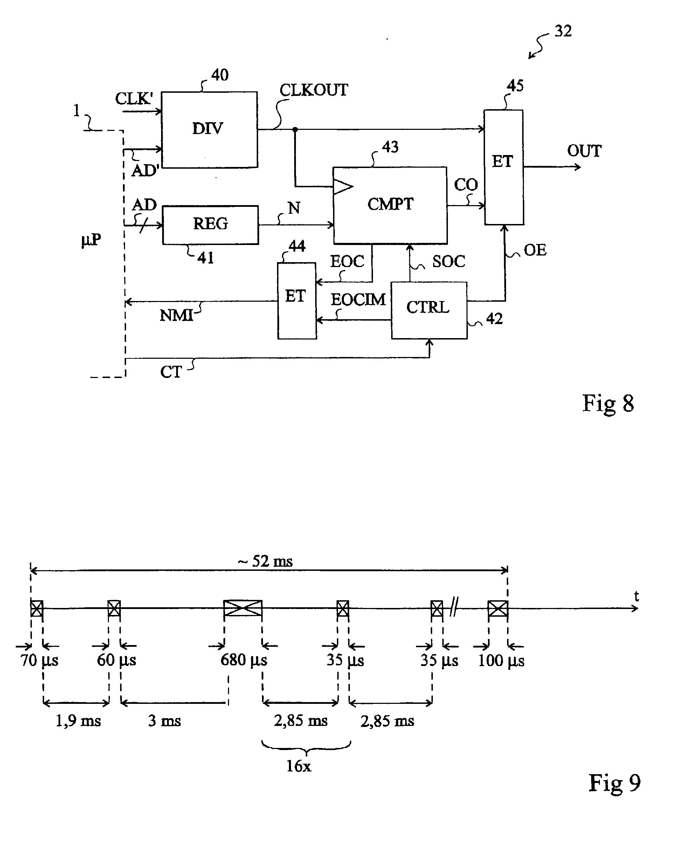

Selon l'invention, le générateur de trains d'impulsions a besoin, pour fonctionner, d'un nombre d'incrémentations à envoyer sur la carte, c'est-à-dire du nombre d'impulsions. Ce nombre est fourni par le microprocesseur 1 au moyen d'un bus d'adresse et de données AD. Ce bus sert également à fixer la fréquence des impulsions générées par le circuit 32. De préférence, ce circuit se comporte comme un diviseur programmable associé à une logique de comptage des impulsions. Par conséquent, le bus AD permet également d'envoyer, au circuit 32, le taux de division de fréquence d'un signal d'horloge. Dans l'exemple de la figure 3, on a représenté un signal d'horloge CLK' pour faire ressortir que ce signal n'est pas nécessairement le même que le signal d'horloge CLK. En particulier, et comme on le verra par la suite en relation avec la figure 8, le signal d'horloge à destination du générateur 32 peut provenir, soit du microprocesseur 1, soit d'un oscillateur externe. Enfin, le microprocesseur 1 envoie au moins deux signaux de commande CS et WR au circuit 32. Le rôle de ces signaux CS et WR est de fournir (de préférence, par combinaison d'états afin de limiter le nombre de bornes des circuits) les instructions de commande nécessaires au fonctionnement du générateur 32. Parmi ces instructions de commande, on notera une commande en écriture dans un registre de stockage du nombre d'incrémentations à fournir, une instruction d'écriture du taux de division dans le diviseur programmable du signal d'horloge, et des instructions d'organisation des échanges (plus particulièrement, de déclenchement du comptage des incréments, et de déclenchement de l'interruption NMI à destination du microprocesseur).

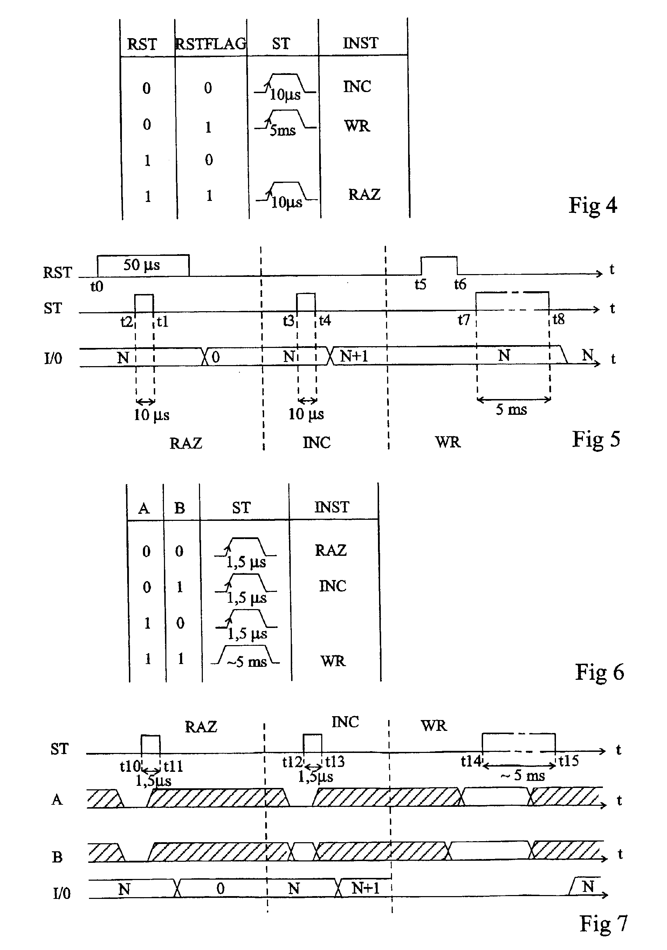

Les figures 4 à 7 illustrent les fonctionnements respectifs des cartes synchrones des deux principales familles utilisant des protocoles à cinq ou à six contacts. Les figures 4 et 6 représentent les tables de vérité respectives permettant d'extraire les signaux d'incrémentation INC, de remise à zéro RAZ et d'écriture WR du décodeur (16, figure 2) à partir des signaux d'entrée, à savoir les signaux RST et ST pour les cartes à cinq contacts (figure 4) et les signaux A, B et ST pour les cartes à six contacts (figure 6). Les figures 5 et 7 représentent des chronogrammes illustrant des exemples d'allures respectives des signaux RST, ST et I/O (figure 5) et des signaux ST, A, B et I/O pour les cartes à cinq et six contacts, respectivement.

Dans un protocole à cinq contacts, on mémorise l'état du signal RST à chaque coup d'horloge afin de disposer, en permanence, de l'état précédent du signal RST en même temps que de son état courant. Cet état précédent est symbolisé en figure 4 par l'état du signal RSTFLAG. En fait, le signal RSTFLAG passe à l'état un en même temps que le signal RST et est remis à l'état zéro sur le front descendant suivant du signal ST. Cette combinaison s'effectue en interne dans la carte synchrone au sein de l'équivalent du décodeur 16, illustré en figure 2 dans le cas d'un protocole à six contacts. Par conséquent, dans un protocole à cinq contacts, l'instruction de commande du compteur dépend de la position de l'impulsion d'horloge du signal ST par rapport à l'impulsion du signal RST.

Pour une remise à zéro (RAZ) du compteur (partie gauche des chronogrammes de la figure 5), il faut que les signaux RST et RST FLAG soient à l'état un lorsque se présente une impulsion du signal d'horloge ST. Comme cela a été indiqué précédemment, le signal RSTFLAG passe à l'état haut en même temps que le signal RST (instant t0) et est remis à l'état bas au front descendant du signal d'horloge (ici l'instant t1). Si l'impulsion du signal d'horloge est incluse dans l'impulsion du signal RST comme cela est indiqué en partie gauche de la figure 5, le front montant du signal ST se produit à un instant t2 où les signaux RST et RST FLAG sont tous deux à l'état un. Par conséquent, on décode une instruction de remise à zéro du compteur qui se traduit, sur la ligne I/O, par un passage de la donnée N vers une donnée initiale symbolisée par zéro. La remise à zéro est effective à la disparition du signal RST.

Pour une incrémentation (INC) du compteur, il faut que les deux signaux RST et RST FLAG soient à l'état bas, c'est-à-dire qu'une impulsion d'horloge ST apparaisse alors que le signal RST est resté à l'état bas depuis le front descendant précédent du signal ST. Cette configuration est illustrée par la partie centrale de la figure 5 où une impulsion du signal ST est présente entre les instants t3 et t4. Une incrémentation de l'état du compteur, pouvant se traduire sur la ligne I/O par le passage d'un compte N à un compte N+1, se produit après la disparition de l'impulsion sur la ligne ST.

Pour une écriture (WR), dans la mémoire de la carte, du compte obtenu dans le compteur, il faut que le signal RST soit à l'état zéro tandis que le signal RSTFLAG est à l'état un. Pour cela, le signal RST est positionné à l'état haut à un instant t5 puis repassé à l'état bas à un instant t6 situé avant l'apparition d'un front montant du signal d'horloge (instant t7). Comme le signal RST est redescendu à l'état bas, seul le signal RSTFLAG se trouve à l'état haut lorsqu'apparaît, à l'instant t7, le front montant du signal ST. L'écriture est déclenchée par le front descendant (instant t8) du signal ST. Dans l'exemple de la figure 5, on suppose qu'un bit vierge est à l'état un et qu'un bit programmé est à l'état zéro. C'est pourquoi la ligne I/O d'entrée sortie a été illustrée canine passant de l'état un à zéro à partir de l'instant t8.

On notera que la durée des niveaux haut et bas du signal ST doit, dans l'exemple pris d'un protocole à cinq contacts de la norme ISO 7816, être compris entre 10 µs et 50 *µ*s. Pour une remise à zéro, l'impulsion (instants t2 à t1) de remise à zéro doit être comprise dans l'impulsion du signal RST. Par exemple, les impulsions d'horloge durent 10 *µ*s pour une incrémentation et une remise à zéro, tandis qu'elle durent 5 ms pour une écriture dans la mémoire. On notera également que l'état du signal RST est constant pendant toute la séquence d'incrémentation INC.

Avec le fonctionnement de passage à l'état haut du signal RSTFLAG indiqué ci-dessus, la configuration d'un signal RST à l'état haut avec un signal RSTFLAG à l'état bas ne peut pas se produire, c'est pourquoi cette combinaison n'est pas utilisée.

Pour un protocole à six contacts, chaque opération est déclenchée par un front montant du signal ST et la donnée est disponible sur le front descendant de ce signal ST, comme dans le protocole à cinq contacts exposé précédemment. Une remise à zéro du compteur intervient quand les signaux A et B sont tous deux à l'état bas (partie gauche des chronogrammes de la figure 7). A un instant t10, représentant un front montant du signal ST, les signaux A et B sont à l'état bas, ce qui rend la donnée de réinitialisation disponible sur la ligne d'entrée/sortie I/O sur le front descendant t11 de l'impulsion du signal ST.

Pour une incrémentation du compteur, il faut que, à l'apparition d'un front montant t12 d'une impulsion du signal ST (partie centrale des chronogrammes de la figure 7), le signal A soit à l'état zéro et que le signal B soit à l'état bas. La donnée devient disponible à un instant t13 marquant le front descendant du signal ST.

Une écriture dans la mémoire intervient alors que les signaux A et B sont tous deux à l'état haut lorsqu'apparaît un front montant à un instant t14 du signal ST. La donnée est disponible sur la ligne I/O après le front descendant (instant t15) de l'impulsion d'horloge du signal ST. On notera que, dans l'exemple de la figure 7, un bit est considéré comme vierge à l'état zéro et programmé à l'état un, contrairement à l'exposé effectué en relation avec la figure 5.

Dans l'exemple des figures 6 et 7, les impulsions du signal ST sont de courte durée (de l'ordre de 1,5 *µ*s) pour les remises à zéro et les incrémentations et sont d'environ 5 ms pour une écriture dans la mémoire. On notera que les états des signaux A et B peuvent rester constants durant toute la séquence INC.

D'autres protocoles d'échange peuvent être utilisés avec des cartes synchrones mais les deux exemples pris ci-dessus illustrent bien les fortes différences existantes entre l'obtention des instructions d'écriture et de remise à zéro des compteurs. Cela va dans le sens du choix par la présente invention des instructions d'incrémentation pour une génération en logique câblée. On constate en effet que la commande d'incrémentation présente une exécution voisine sur toute les cartes synchrones. En particulier, pendant les phases d'incrémentation, seul le signal ST varie alors que pendant les phases de réinitialisation et d'écriture, différents signaux d'entrée de la carte changent d'état. Bien que cela n'ait pas été illustré aux figures 5 et 7, une incrémentation du compteur s'effectue généralement par trains d'impulsions, c'est-à-dire que les signaux A et B restent aux états respectifs bas et haut (ou que le signal RST reste à l'état bas) pendant une durée relativement longue où interviennent plusieurs impulsions sur le signal ST de façon à fournir plusieurs incréments au compteur.

La fréquence d'horloge permettant la génération des trains d'impulsions est liée à la famille de carte utilisée, de même que le nombre d'impulsions d'un train de longueur définie servant à chaque incrémentation.

La figure 8 représente un mode de réalisation d'un générateur de trains d'impulsions 32 selon la présente invention. Comme cela a été indiqué en relation avec la figure 3, le microprocesseur 1 sert à programmer différents éléments du générateur 32 et à en contrôler le fonctionnement. Dans l'exemple de la figure 8, on a représenté deux bus AD et AD' chargés d'envoyer des mots de programmation, respectivement, à un diviseur programmable 40 (DIV) d'un signal CLK' et à un registre 41 (REG) de stockage du nombre d'impulsions à générer. On notera toutefois qu'un seul bus pourrait être utilisé comme cela a été indiqué en relation avec la figure 3 en adaptant les signaux de commande du diviseur programmable et du registre. Ces signaux de commande n'ont pas été représentés. Il s'agit, par exemple, du résultat d'une combinaison logique des signaux CS et WR de la figure 3 dont deux états de combinaison commandent l'écriture dans le diviseur 40 ou l'écriture dans le registre 41 et dont les deux états combinés restants servent à commander un bloc 42 (CTRL) de contrôle du générateur 32. Cette commande a été symbolisée en figure 8 par une liaison CT. On notera toutefois que l'interfaçage entre le microprocesseur 1 et le circuit 32 pourrait également être effectué par une liaison série plutôt que par un système de liaison parallèle tel que décrit ci-dessus.

Le générateur 32 comporte un compteur 43 (CMPT) dont l'entrée d'horloge reçoit le signal de sortie CLKOUT du diviseur 40 et dont une entrée d'initialisation reçoit le nombre N mémorisé dans le registre 41. Le début du comptage par le compteur 43 est commandé par un signal SOC à partir du bloc 42. Le compteur 43 délivre un signal de fin de comptage EOC à une porte logique de type ET 44 dont une deuxième entrée reçoit un signal EOCIM du bloc 42. La sortie de la porte 44 délivre le signal d'interruption NMI à destination du microprocesseur 1. Le signal EOCIM constitue un masque d'interruption commandable par le microprocesseur par l'intermédiaire du bloc 42. Une sortie CO du compteur 43 est envoyée sur une première entrée d'une porte ET 45 dont une deuxième entrée reçoit le signal d'horloge CLKOUT provenant du diviseur 40. La sortie CO du compteur bascule lorsque celui-ci a atteint le compte N programmé. Par conséquent, la sortie OUT de la porte 45 qui constitue la sortie du générateur 32 à destination du coupleur électrique 4 (figure 3) délivre à chaque intervention du générateur 32 un nombre N d'impulsions d'horloge à la fréquence CLKOUT. La porte 45 est une porte commandable par un signal de validation OE provenant du bloc 42.

La sortie OUT du générateur 32 est envoyée au sélecteur 31 (figure 3) pour délivrer le signal ST au coupleur électrique 4. Le sélecteur 31 est, par exemple, constitué d'une porte logique de type OU.

Le mode de réalisation de la figure 8 ne constitue qu'un exemple particulier de réalisation pour illustrer l'invention, mais le générateur de trains d'impulsions de l'invention pourra prendre bien d'autres formes à la portée de l'homme du métier, pourvu de respecter les indications fonctionnelles contenues dans la présente description.

La mise en oeuvre d'un lecteur de cartes de l'invention s'effectue de la façon suivante.

Lorsqu'une carte à puce synchrone est introduite dans le coupleur électrique 4 du lecteur, un signal CIN de détecteur est généré à destination du microprocesseur. Ce signal CIN constitue une génération d'interruption à destination du microprocesseur pour que celui-ci sache qu'une carte doit désormais être identifiée.

La première étape d'échange entre le microprocesseur et la carte consiste à identifier à quelle famille appartient la carte introduite. Pour ce faire, le microprocesseur lit le signal présent sur la ligne I/O de la carte et en déduit plusieurs paramètres, parmi lesquels l'existence de fonctions actives (authentification), la famille de la carte afin de déterminer le type de séquencement du dialogue qu'il doit mettre en oeuvre, et la fréquence d'horloge de dialogue avec la carte.

Les étapes ci-dessus (détection et identification) sont parfaitement classiques et mises en oeuvre dans tous lecteurs courants.

Dans le cas où le microprocesseur a détecté l'existence de fonctions actives dans la carte, c'est-à-dire l'existence d'un mécanisme d'authentification active (réseau logique programmable et registre à décalage), le microprocesseur programme le générateur 32 de l'invention. Cette programmation initiale consiste à fixer la fréquence d'horloge en programmant le diviseur 40 (figure 8) pour que le signal CLKOUT délivré par celui-ci corresponde à la fréquence d'horloge de la famille de cartes concernée. Puis, pour l'authentification, le microprocesseur programme, à chaque train d'impulsions de la séquence d'authentification, le nombre d'impulsions à délivrer, c'est-à-dire le nombre N de comptage du compteur 43 dans le registre 41.

A chaque fin de comptage, le microprocesseur récupère l'interruption générée par le générateur 32. Cette interruption est prioritaire pour que le microprocesseur puisse poursuivre la séquence d'authentification sans prendre de retard. Le résultat du calcul d'authentification est fourni par la carte sur sa borne d'entrée sortie I/O (bit par bit). Le microprocesseur le fournit à un module de sécurité qui fait le même calcul pour authentifier et valider la présence de la carte.

La récupération de l'authentification par le microprocesseur correspond au fonctionnement classique des cartes synchrones pourvues de fonctions actives. Par exemple, on lit sur la borne d'entrée-sortie de la carte un bit de résultat tout les N coups d'horloge et on détecte le changement de valeur de l'état du registre qui se produit en cas d'interruption.

On notera que le signal OE de validation de la sortie du générateur est optionnel et est utilisé par sécurité, et que le signal EOCIM de masque d'interruption, généré par le bloc 42, permet la synchronisation de l'interruption NMI avec le fonctionnement du microprocesseur 1.

La figure 9 représente un exemple de séquence d'authentification classique mise en oeuvre au moyen du lecteur de l'invention. Cette figure représente un chranogramre distinguant les périodes d'incrémentation du compteur de la carte qui sont donc, selon l'invention, mises en oeuvre par le générateur 32, des périodes de remise à zéro ou d'écriture qui sont, selon l'invention, mises en oeuvre par le microprocesseur 1. Dans le chronogramme de la figure 9, on a également tenu compte des besoins de programmation du générateur 32 par le microprocesseur 1 qui sont désormais nécessaires par la mise en oeuvre de l'invention.

A la figure 9, les séquences logicielles ont été distinguées des séquences de génération d'impulsions par le générateur 32 de l'invention en symbolisant les séquences logicielles par des tronçons à des états différents de zéro. On peut donc considérer que le chronogramme de la figure 9 illustre l'occupation du microprocesseur pour la séquence d'authentification, le microprocesseur étant libre lorsque le chronogramme est à l'état zéro.

Une séquence d'authentification dans l'exemple représenté à la figure 9 commence par une réinitialisation du réseau logique programmable et du registre à décalage de la carte. Cette séquence comprend 70 microsecondes d'intervention logicielle pour 1,9 millisecondes d'incrémentation du compteur. Cette séquence est suivie par une phase de démarrage de l'authentification qui comprend 60 microsecondes de phase logicielle et 3 millisecondes de train d'impulsions, puis 680 microsecondes de phase logicielle. Ensuite, pour chaque bit d'authentification (par exemple 16), c'est-à-dire pour chaque bit de signature attendu, on envoie un train d'impulsions pendant 2,85 millisecondes et on lit la réponse de façon logicielle pendant 35 microsecondes. En figure 9, seuls deux bits de signature ont été illustrés. L'authentification se termine par une réinitialisation logicielle du réseau logique programmable et du registre à décalage des fonctions actives de la carte à puce.

Une signature de 16 bits demande, selon cet exemple, un total d'environ 52 millisecondes. On constate que le microprocesseur est libre et disponible pour les autres fonctions pendant la majeure partie de ces 52 millisecondes. La période maximale de réservation du microprocesseur pour les fonctions logicielles liées à l'authentification est de 680 microsecondes une fois par authentification. Cette durée est parfaitement compatible avec les autres contraintes de fonctionnement d'un lecteur de carte à puces, y compris pour des fonctions particulièrement répétitives.

Dans l'exemple des cartes téléphoniques pré-payées, une séquence d'authentification se produit après chaque marquage de taxe sur la carte à puce.

On notera que le temps de réponse du microprocesseur, qui est de quelques 10 à 20 microsecondes pour reprendre la main sur le générateur 32 suite à une interruption prioritaire par le signal NMI, est parfaitement compatible avec la contrainte de temps réel des séquences d'authentification concernées.

On notera également que la fréquence CLKOUT des trains d'impulsions n'a pas forcément besoin d'être stable. Il est toutefois impératif, dans la plupart des applications, qu'elle soit comprise entre 10 kHz et 50 kHz, ce qui conduit à une période comprise entre 20 et 100 microsecondes. De plus, le rapport cyclique des impulsions générées par le circuit 32 doit être compatible avec les impératifs des fonctions actives des cartes. Par exemple, une durée d'état haut comprise entre 10 et 50 microsecondes et une durée d'état bas comprise entre 10 et 50 microsecondes répondent à des critères de fonctionnement d'une famille de cartes à fonctions actives très répandue.

La réalisation pratique d'un générateur de trains d'impulsions pour mettre en oeuvre la présente invention est à la portée de l'homme du métier à partir des indications fonctionnelles données ci-dessus. En particulier, on pourra réaliser ce générateur au moyen d'un réseau de portes programmables à l'aide de registres de configuration. Ces registres devront définir, notamment, la fréquence d'horloge, le nombre d'impulsions par train, et permettre de commander et de lire l'état de sortie du générateur d'impulsions. On notera toutefois que, dans le cas d'un lecteur dédié à une famille de cartes donnée, la fréquence pourrait être fournie par un oscillateur à fréquence fixe.

Un avantage de la présente invention est qu'elle permet de libérer considérablement le microprocesseur pour l'exécution de fonctions d'authentification actives au sein d'un lecteur de cartes à puces synchrones.

Un autre avantage de la présente invention est qu'elle permet d'obtenir un lecteur parfaitement versatile s'adaptant aux différents types de cartes. En particulier, on notera que le générateur de trains d'impulsions peut également être utilisé pour l'incrémentation du compteur de la carte en dehors des périodes d'authentification. Dans ce cas, l'invention apporte déjà un avantage qui est de réduire la consommation pendant les périodes de génération de trains d'impulsions. En effet, un circuit en logique câblée consomme nettement moins que le microprocesseur pendant ces phases.

Un autre avantage de la présente invention est qu'en limitant le recours à un circuit programmable, pour la génération d'un seul des signaux d'une carte synchrone, le circuit en logique câblée reste simple et peu encombrant tout en étant configurable (par exemple, par les registres) pour s'adapter à des changements de protocole d'échange.

Un autre avantage de la présente invention est qu'elle permet d'accélérer les calculs d'authentification même pour des cartes ne présentant pas de contraintes de temps réel.

On notera que, à titre de variante, on pourrait se dispenser d'utiliser le signal de sortie du générateur 32 et se contenter de mesurer des intervalles entre les interruptions NMI au sein du microprocesseur. Une telle variante permet de générer des impulsions d'écriture sur la carte qui sont les impulsions de durée les plus longues (5 ou 10 millisecondes selon les protocoles). On améliore ainsi la résolution par rapport à l'horloge du microprocesseur qui est précise à environ 10 millisecondes près. Le bloc de génération d'impulsion sert alors de base de temps au cycle d'écriture.

Bien entendu, la présente invention est susceptible de diverses variantes et modifications qui apparaîtront à l'homme de l'art. En particulier, bien que l'invention ait été décrite plus particulièrement en relation avec des cartes téléphoniques prépayées, celle-ci s'applique à d'autres types de cartes synchrones qui ont toutes pour point commun de devoir faire transiter, entre le lecteur et la carte, un signal d'horloge, c'est-à-dire des trains d'impulsions pour lesquels l'invention est utilisable.

De plus, les séquencements temporels illustrés à titre d'exemple dans la description qui précède devront être adaptés aux applications et, en particulier, aux fréquences et nombres de cycles d'impulsions nécessaires. Ces adaptations sont à la portée de l'homme du métier à partir des indications fonctionnelles données ci-dessus.

En outre, on notera que l'invention ne nécessite aucune modification des cartes à puces et est donc parfaitement compatible avec tous les systèmes à cartes synchrones existants.

## Revendications

1. Lecteur (30) de cartes à puce synchrones du type comprenant un microprocesseur (1) pour gérer les échanges entre le lecteur et une carte (2) introduite dans un coupleur électrique (4), le microprocesseur délivrant notamment au moins un signal de commande (A/RST) et recevant un signal d'entrée/sortie (I/O) sur un bit, caractérisé en ce qu'il comporte un générateur programmable (32) de trains d'impulsions en logique câblée, propre à délivrer un signal impulsionnel de fréquence fixe à destination du coupleur électrique pour l'incrémentation d'un compteur (17) de la carte à puce, le nombre d'impulsions générées par ledit générateur étant programmable par le microprocesseur.

2. Lecteur selon la revendication 1, caractérisé en ce que le générateur d'impulsions (32) comporte une borne de sortie d'un signal d'interruption prioritaire (NMI) à destination du microprocesseur (1).

3. Lecteur selon l'une quelconque des revendications 1 ou 2, caractérisé en ce qu'il comporte, sur une ligne de transmission d'un signal d'horloge à destination de la carte, un sélecteur (31) propre à sélectionner un signal d'horloge entre une sortie du microprocesseur (1) et une sortie du générateur d'impulsion (32).

4. Lecteur selon la revendication 3, caractérisé en ce que la sortie du générateur d'impulsions (32) est sélectionnée pour chaque cycle d'incrémentation du compteur (17) de la carte (2).

5. Interface entre un microprocesseur (1) et un élément (4) de contacts électriques destiné à contacter une carte à puce synchrone, caractérisée en ce qu'elle comporte :
un générateur programmable (32) de trains d'impulsions en logique câblée, propre à délivrer un signal impulsionnel (OUT) de fréquence fixe ; et
des liaisons directes entre le microprocesseur (1) et l'élément de contact (4) pour tous les autres signaux à destination de la carte ou à destination du microprocesseur, le nombre d'impulsions délivrées par le générateur étant programmable par le microprocesseur.

6. Interface selon la revendication 5, caractérisée en ce que la fréquence des impulsions du générateur programmable (32) est fixée par le microprocesseur (1).

7. Interface selon la revendication 6, caractérisée en ce que le générateur programmable (32) comporte une sortie d'un signal d'interruption prioritaire (NMI) à destination du microprocesseur (1).
